# FASCICULE DE BREVET EUROPEEN

(11) **EP 3 343 450 B1**
(45) Date de publication et mention de la délivrance du brevet: **05.02.2020**
(21) Numéro de dépôt: 16207333.2
(22) Date de dépôt: 29.12.2016
(51) Int. Cl.: G04R 20/26, H01H 36/00, H01Q 1/22, H01Q 7/00, G04R 60/08, G06K 19/073, G04G 21/04, G06K 19/077, H01H 36/02, H01Q 1/27

(54) **OBJET PORTABLE COMPORTANT UN DISPOSITIF DE CONNEXION EN CHAMP PROCHE**
TRAGBARER GEGENSTAND, DER EINE NAHFELDVERBINDUNGSVORRICHTUNG UMFASST
PORTABLE OBJECT COMPRISING A NEAR-FIELD CONNECTION DEVICE

(43) Date de publication de la demande: 04.07.2018
(73) Titulaire: The Swatch Group Research and Development Ltd, 2074 Marin (CH)
(72) Inventeur: Vuille, Pierry, 2338 Les Emibois (CH); Martin, Jean-Claude, 2037 Montmollin (CH); Willemin, Michel, 2515 Prêles (CH); Scordilis, Thierry, 2036 Cormondrèche (CH)
(74) Mandataire: Ravenel, Thierry Gérard Louis

(56) Documents cités:
- EP-A1- 1 876 556
- WO-A1-2011/067543
- US-A1- 2002 101 457
- US-A1- 2007 152 828

## Description

### DOMAINE TECHNIQUE

La présente invention se rapporte au domaine des microtechniques. Elle concerne plus particulièrement un objet portable comportant un dispositif de connexion en champ proche.

### ART ANTERIEUR

Il est connu de réaliser des objets portables incorporant des moyens de communication en champ proche par exemple à l'aide d'une étiquette radiofréquence. Ces moyens de connexion sont composés d'une puce électronique, ou circuit intégré, reliée électriquement à une antenne. La plupart du temps, ces dispositifs n'ont pas besoin d'une alimentation électrique autonome et sont destinés à communiquer automatiquement avec un lecteur dès qu'ils s'en approchent. Le champ électromagnétique du lecteur génère un courant induit dans l'antenne qui alimente la puce et lui permet d'émettre à son tour un signal via l'antenne.

On trouve couramment de tels dispositifs dans les cartes à puces qui permettent d'effectuer des paiements sans contact aux bornes prévues à cet effet. On connait également les demandes EP 603 721, EP 974 878, CH 690 525 ou CH 704 583 qui décrivent des montres comportant des moyens de communication en champ proche dans lesquelles les antennes sont dissimulées à différents endroits de la montre comme le cadran, la carrure, la lunette, le joint de glace ou la glace. D'autres configurations prévoient de loger l'antenne dans le fond, le mouvement ou encore le bracelet. L'intégration de ces dispositifs de communication sans contact dans une montre permet de nombreuses applications comme la réalisation d'opérations d'information, d'identification, de verrouillage, de contrôle d'accès ou de paiement.

Cependant, ces dispositifs de communication automatique présentent une grande vulnérabilité vis-à-vis de tiers malintentionnés qui pourraient, en approchant un émetteur récepteur, récupérer à l'insu de leurs propriétaires, des informations confidentielles ou faire exécuter des virements bancaires à leur profit. Différentes parades ont été développées pour sécuriser les dispositifs de communication en champ proche. Les cartes de paiement peuvent ainsi être placées dans des étuis blindés qui agissent comme une cage de Faraday et empêchent la communication de s'établir. La demande US 2016/0188925 décrit un procédé pour activer ou désactiver une étiquette radiofréquence possédant un interrupteur électronique à l'aide d'un lecteur auxiliaire approprié. L'opération de déverrouillage électronique peut s'avérer fastidieuse et peu pratique puisqu'elle nécessite de manipuler un autre objet que celui par lequel s'établit la communication. De surcroit, elle présente une faille de sécurité car le dispositif de communication en champ proche reste vulnérable entre le moment où il est activé et celui où la communication s'établit. Les différentes méthodes de sécurisation connues sont inadaptées à certains objets portables comme une montre bracelet, sont peu pratiques et ne permettent pas d'éliminer totalement les risques de piratage.

WO2011/067543 A1 divulgue une carte ayant un interrupteur mécanique ou électrique pour activer ou désactiver la possibilité de communication sans fil de la carte.

### RESUME DE L'INVENTION

La présente invention a pour but de proposer un moyen pour sécuriser un dispositif de communication en champ proche intégré à un objet portable qui soit facile à utiliser et plus sûr que les solutions de l'art antérieur.

De façon plus précise, l'invention concerne un objet portable comportant un dispositif de communication en champ proche selon la revendication 1.

Cet agencement permet de sécuriser un dispositif de communication en champ proche intégré dans un objet portable tout en simplifiant les opérations nécessaires à cette sécurisation.

Selon une première variante de l'invention, l'interrupteur mécanique est monté en série sur le circuit électrique et se trouve dans l'état ouvert quand l'organe de commande est en position passive.

Selon une seconde variante, l'interrupteur mécanique est monté en parallèle de l'antenne et se trouve dans l'état fermé quand l'organe de commande est en position passive.

Selon une autre variante avantageuse de l'invention, l'aimant permanent est lié cinématiquement à l'organe de commande.

Selon une autre variante avantageuse de l'invention, l'interrupteur Reed est lié cinématiquement à l'organe de commande.

Selon une autre variante avantageuse de l'invention, l'objet portable comporte au moins deux interrupteurs Reed disposés de façon sensiblement perpendiculaire.

Selon une autre variante avantageuse de l'invention, l'objet portable comporte un interrupteur de sécurité agencé pour changer d'état simultanément avec l'interrupteur Reed en présence d'un champ magnétique extérieur.

Selon une variante avantageuse de l'invention, l'objet portable comporte un moyen de rappel agencé pour ramener automatiquement l'organe de commande de la position active vers la position passive.

Selon une autre variante avantageuse de l'invention, le moyen de rappel comporte un élément élastique.

Selon une autre variante avantageuse de l'invention, l'objet portable comporte un moyen de temporisation agencé pour retarder le retour de l'organe de commande de la position active vers la position passive.

Selon une autre variante avantageuse de l'invention, l'objet portable est une montre.

Selon une autre variante avantageuse de l'invention, la montre comporte une lunette pivotante qui est l'organe de commande.

Selon une autre variante avantageuse de l'invention, l'antenne est formée par un procédé « Ceragold TM ».

Selon une autre variante avantageuse de l'invention, la montre comporte un poussoir qui est l'organe de commande.

Selon une autre variante avantageuse de l'invention, l'objet portable est une carte à puce.

Selon une autre variante avantageuse de l'invention, la carte à puce comporte un segment souple délimitant une partie qui est l'organe de commande

Selon une autre variante avantageuse de l'invention, la carte à puce comporte une paroi déformable délimitant au moins partiellement un évidemment, la paroi déformable étant l'organe de commande.

### BREVE DESCRIPTION DES FIGURES

D'autres détails de l'invention apparaîtront plus clairement à la lecture de la description qui suit, faite en référence aux dessins annexés dans lesquels :
- la figure 1 représente un schéma de principe d'une première exemple ne faisant pas partie de l'invention,
- la figure 2 représente une deuxième exemple ne faisant pas partie de l'invention,
- la figure 3 représente une vue d'une montre selon une autre exemple ne faisant pas partie de l'invention,
- la figure 4 représente une vue en coupe de la montre représentée à la figure 3,
- les figures 5 et 6 représentent une vue en coupe de la montre de la figure 3, respectivement dans les positions passive et active si l'interrupteur est en série avec le circuit électrique,
- la figure 7 représente une vue en perspective d'une variante de réalisation de la lunette de la montre de la figure 3,
- la figure 8 représente une vue en coupe d'un détail de réalisation d'une montre selon l'invention,
- les figures 9 et 10 représentent des schémas de principe d'un dispositif sécurisé à interrupteur Reed,
- la figure 11 représente la vue d'une montre selon un mode de réalisation de l'invention dans le cas ou l'interrupteur mécanique est un interrupteur Reed,
- les figures 12 et 13 représentent une première variante d'une carte à puce qui ne fait pas pas partie de l'invention, respectivement dans les position passive et active, si l'interrupteur est en série avec le circuit électrique,
- les figures 14 et 15 représentent une vue en coupe d'une deuxième variante d'une carte à puce qui ne fait pas pas partie de l'invention.

### DESCRIPTION DETAILLEE

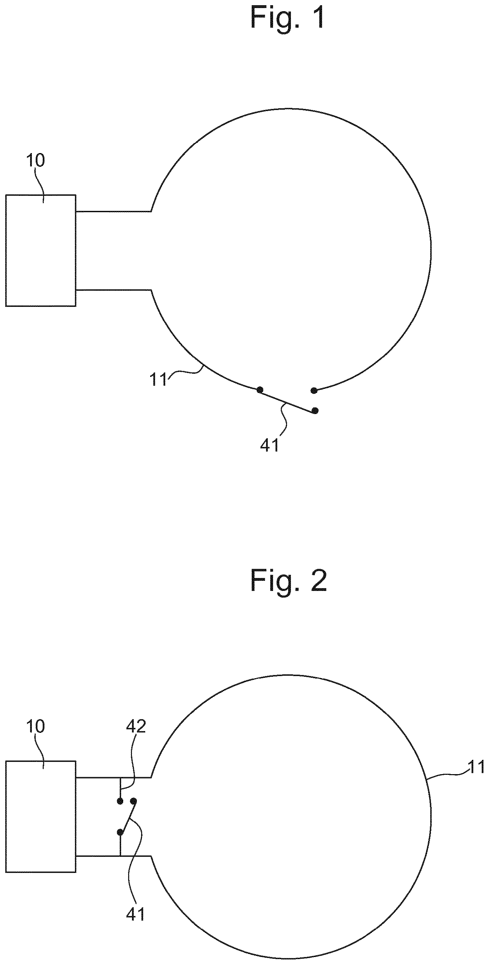

Les figures 1 et 2 représentent des schémas de principe du dispositif de communication en champ proche sécurisé que l'exemple propose d'intégrer dans des objets portables. Le dispositif de communication comporte une puce électronique 10 dont deux bornes sont connectées aux extrémités d'une antenne 11 en forme de boucle et formant avec la puce électronique 10, intégrant un filtre passe bande, par exemple du type RLC, un circuit électrique.

Dans une première variante représentée sur la figure 1, un interrupteur mécanique 41 est monté en série sur le circuit électrique. L'interrupteur 41 se trouve représenté à l'état ouvert c'est-à-dire que le dispositif de communication est désactivé et de ce fait, sécurisé. La fermeture de l'interrupteur 41 rend le dispositif actif et apte à effectuer des communications en champ proche.

Dans une deuxième variante représentée sur la figure 2, une branche de dérivation 42 est reliée aux bornes de la puce électronique et constitue une branche parallèle à celle formée par l'antenne 11. La branche de dérivation comporte un interrupteur 41 qui se trouve donc monté en parallèle de l'antenne 11. Lorsque l'interrupteur est dans l'état fermé, l'antenne est court-circuitée et le dispositif de communication est désactivé. Inversement, le dispositif est activé et apte à communiquer lorsque l'interrupteur est placé dans l'état ouvert comme cela est représenté sur la figure 2.

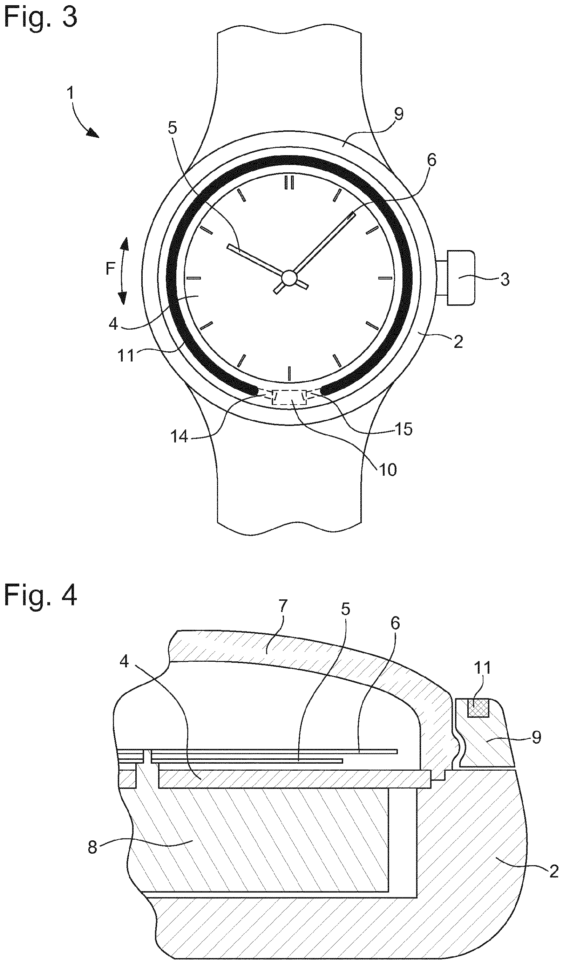

Les figures 1 à 4 représentent un premier objet portable selon une autre exemple, à savoir une montre 1 à affichage analogique qui comporte une carrure 2, une couronne de commande 3, un cadran 4, des aiguilles 5, 6, une glace 7 et un mouvement 8. La montre comporte également une lunette 9 montée pivotante en référence à la boite 2 dans les deux sens (flèche F sur la figure 3) sur au moins une distance angulaire prédéterminée comme on le verra dans la suite de la description. La montre comporte en outre un dispositif de communication en champ proche composé d'une puce électronique 10 logée dans la carrure 2, et d'une antenne 11 en forme de boucle dont les deux extrémités sont destinées à être reliées électriquement à la puce électronique 10 en formant avec elle un circuit électrique. L'antenne est formée sur la partie supérieure de la lunette 9 dans un matériau conducteur, typiquement un matériau métallique. La lunette est de préférence réalisée dans un matériau non conducteur tel une céramique. La fabrication d'un tel composant peut être obtenue par le procédé « Ceragold™ » décrit dans la demande EP 2725000. Ce procédé permet de réaliser des portions terminales 12, 13 en matériau conducteur traversant la lunette 9 et reliant l'antenne située sur la partie supérieure à la partie inférieure de la lunette sur laquelle elles débouchent. Des pattes de contact élastiques 14, 15, connectées à la puce électronique 10, sont agencées pour venir en appui contre la partie inférieure de la lunette 9.

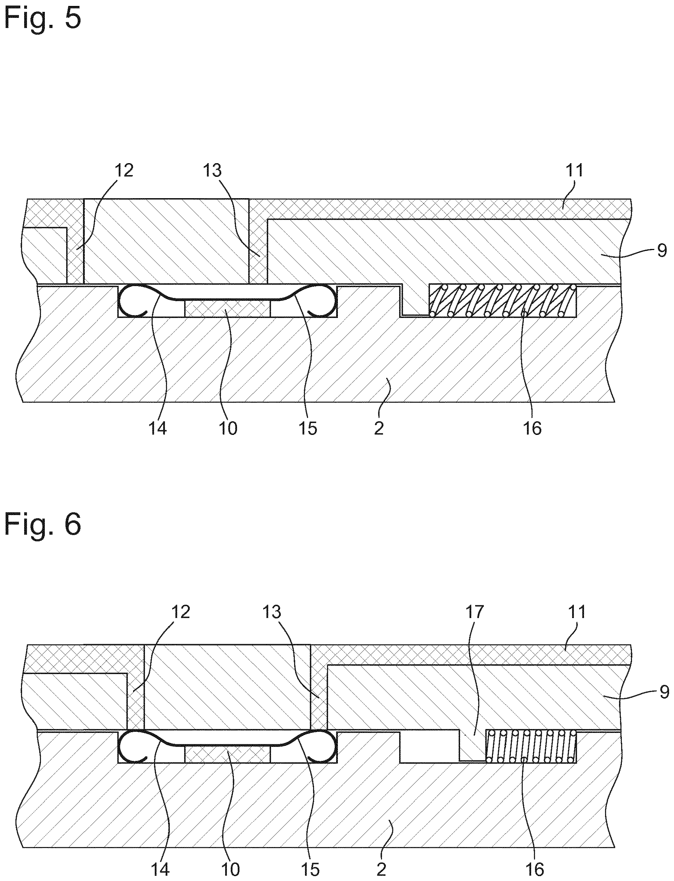

Lorsque l'organe de commande, ici la lunette, est dans une première position prédéfinie, dite position passive, représentée à la figure 5, les pattes de contact 14, 15 sont en appui contre le matériau non conducteur de la lunette 9 si bien que le circuit électrique formé par l'antenne 11 et la puce 10 est ouvert et que le dispositif de communication en champ proche est désactivé.

Lorsque l'organe de commande est dans une deuxième position prédéfinie, dite position active, représentée à la figure 6, les pattes de contact 14, 15 sont en appui contre le matériau conducteur des portions terminales 12, 13 si bien que la puce électronique 10 est reliée électriquement à l'antenne 11 et que le circuit électrique est actif et peut opérer sa fonction en présence d'un champ proche.

Ainsi en faisant pivoter la lunette 9, il est possible d'activer et de désactiver à volonté le dispositif de communication en champ proche ce qui permet, en désactivant le dispositif, de se prémunir contre les risques de communication frauduleuse. L'ensemble composé par la lunette et les portions terminales 12, 13 d'un côté et par les pattes de contact 14, 15 et le boitier de l'autre, constitue un interrupteur mécanique 41 tel qu'il apparaît dans le schéma de principe de la figure 1. L'exemple décrit ici considère que l'interrupteur est en série avec le circuit électrique. Il peut bien sûr être adapté pour le cas où cet interrupteur est en parallèle avec le circuit électrique, et où les positions fermée respectivement ouverte correspondent à un circuit inactif respectivement actif.

La montre 1 peut également comporter un moyen de rappel sous la forme d'un ressort 16, agencé pour ramener la lunette 9 de la position active vers la position passive. Le ressort 16 est placé dans un logement de la carrure et vient en appui contre un ergot 17 solidaire de la lunette 9. Une butée non représentée permet d'indexer la position de la lunette dans la position active où les pattes de contact 14, 15 sont en appui contre les portions terminales 12, 13 de l'antenne 11.

L'utilisateur qui souhaite activer le dispositif, par exemple pour effectuer un paiement, doit faire pivoter la lunette 9 contre l'action du ressort de rappel 16 jusqu'à la butée. Dès qu'il relâche la lunette 9, celle-ci revient automatiquement dans la position passive où le dispositif est inactif. Le moyen de rappel offre ainsi une sécurité supplémentaire en supprimant le risque d'oubli de la lunette dans la position active. Alternativement, il est aussi envisageable d'introduire un moyen de temporisation au niveau de l'organe de commande pour ralentir ou retarder son retour dans la position passive de sorte que le dispositif de communication reste actif le temps nécessaire à établir la connexion sans que l'utilisateur ait à maintenir l'organe de commande dans la position active. Cela présente comme autre avantage d'éviter un défaut de communication dans le cas où l'utilisateur relâcherait l'organe de commande prématurément.

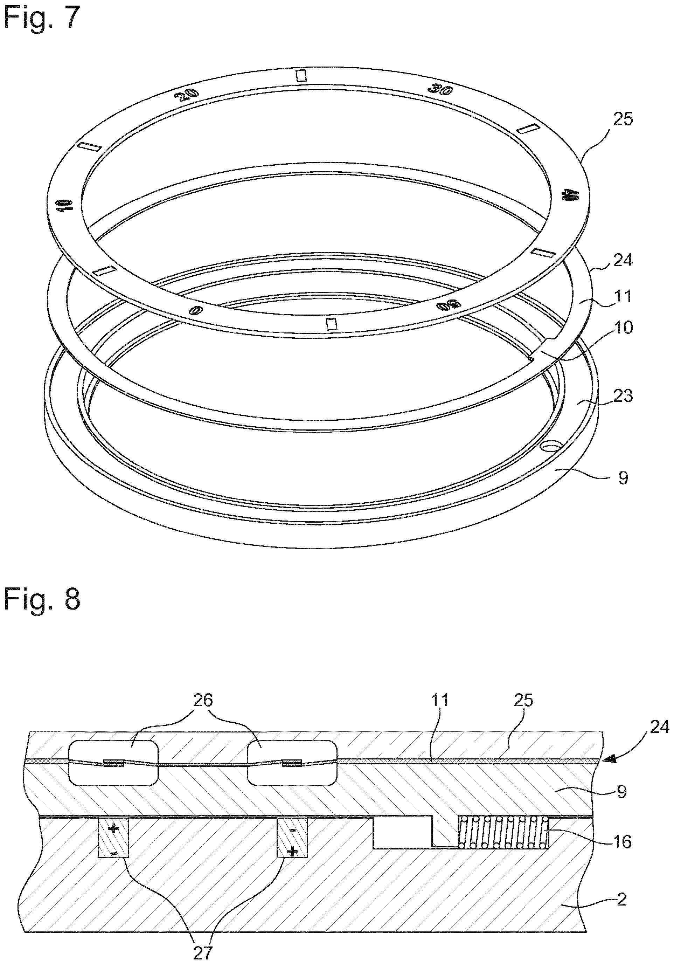

D'autres solutions techniques pour réaliser l'antenne sont possibles. On peut remplacer la croissance galvanique par de la pâte à braser. On peut également usiner la lunette en céramique pour l'insertion de l'antenne sous la forme d'un fil enroulé de type boucle. Dans une autre variante représentée à la figure 7, on réalise, dans un matériau non conducteur, une lunette 9 pivotante comportant sur son pourtour un logement 23 dans lequel est inséré un circuit imprimé mince 24 portant la puce électronique 10 et l'antenne 11 en forme de boucle. Une couverture 25 permet de fermer le logement 23 en protégeant et fixant le circuit imprimé 24. La couverture 25 pourra être réalisée en toute sorte de matériau non conducteur tel un polymère ou une céramique. Le circuit formé par l'antenne 11 est ouvert et ses extrémités débouchent en vis-à-vis d'une lame conductrice située sur la boîte d'une façon analogue à celle représentée en liaison avec les figures 5 et 6. Les extrémités viennent en contact galvanique avec la lame conductrice lorsque la lunette est dans la position active de façon à activer le dispositif de communication en champ proche.

Selon l'invention, la figure 8 représente une coupe d'une autre variante de la montre de la figure 5 dans laquelle le circuit électrique composé de la puce électronique 10 et de l'antenne 11, comporte un autre type d'interrupteur mécanique, en l'occurrence un interrupteur magnétique 26 à lame souple de type interrupteur Reed, à la place de l'interrupteur galvanique décrit précédemment. Dans ce cas, la montre comporte également un aimant permanent 27 cinématiquement lié au boitier et mobile en référence à l'interrupteur Reed 26 qui est lui, cinématiquement lié à l'organe de commande. L'ensemble est agencé pour que le déplacement de l'organe de commande, ici la lunette 9, entre ses positions prédéfinies, modifie l'état de l'interrupteur Reed 26. La figure 8 représente l'organe de commande dans sa position active. Dans le mode de réalisation illustré, l'interrupteur Reed 26 est solidaire de la lunette 9 alors que l'aimant permanent 27 est solidaire du boitier 2. Alternativement le circuit électrique et l'interrupteur Reed 26 pourraient être logés dans le boitier et l'aimant pourrait être relié cinématiquement à l'organe de commande.

Dans une variante de réalisation non représentée, un objet portable comporte au moins deux interrupteurs Reed 26 coopérant avec au moins un aimant permanent 27. D'une façon originale, les interrupteurs Reed 26 sont disposés de façon qu'un champ magnétique extérieur ne puisse pas commuter l'ensemble des interrupteurs Reed simultanément. Pour ce faire, les interrupteurs Reed ont des orientations distinctes et sont de préférence disposés de façon sensiblement perpendiculaire. On empêche ainsi que les interrupteurs 26 puissent être fermés simultanément en étant placés dans un champ magnétique extérieur homogène lors d'une tentative de connexion frauduleuse à l'aide d'un lecteur et d'un aimant. Cela constitue une sécurité supplémentaire pour les dispositifs de communication en champ proche utilisant des interrupteurs Reed.

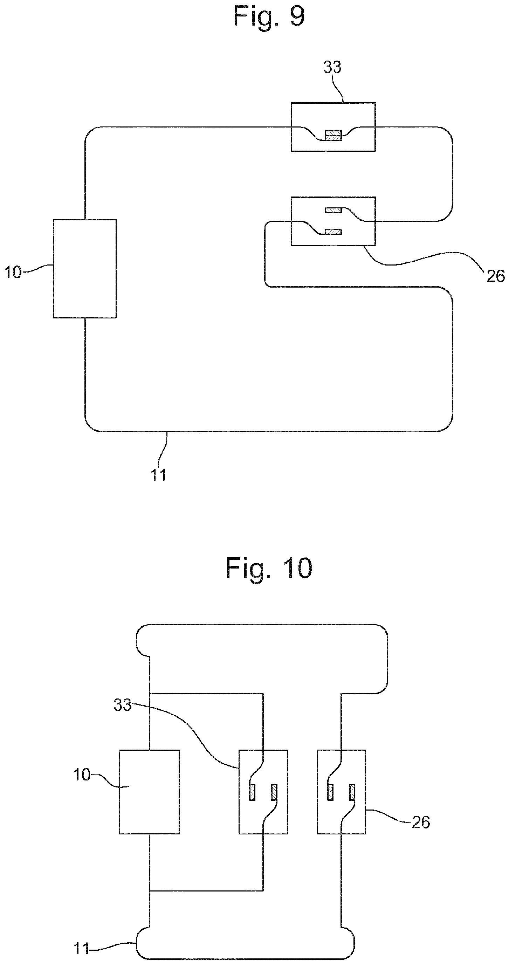

Les figures 9 et 10 présentent d'autres configurations permettant de sécuriser totalement un dispositif de communication en champ proche utilisant des interrupteurs Reed. Pour se prémunir du risque d'une connexion frauduleuse à l'aide d'un lecteur et d'un aimant, l'objet portable comporte un interrupteur de sécurité 33 supplémentaire qui est également un interrupteur Reed. Contrairement à l'interrupteur Reed 26 principal, l'interrupteur de sécurité 33 n'est pas associé à un aimant permanent car il n'est pas destiné à changer d'état lors d'un fonctionnement normal mais uniquement en cas d'attaque.

Dans une première configuration représentée à la figure 9, l'interrupteur de sécurité 33 est monté en série avec l'interrupteur Reed 26. L'interrupteur de sécurité 33 est dans ce cas un interrupteur de type NF, normalement fermé, c'est-à-dire qu'il est fermé en l'absence de champ magnétique et qu'il commute en position ouverte sous l'effet d'un champ magnétique. L'interrupteur Reed 26 est de type NO, normalement ouvert, et fonctionne à l'inverse du précédent. En cas d'attaque à l'aide d'un aimant, l'interrupteur de sécurité 33 et l'interrupteur Reed 26 commutent simultanément sous l'effet du champ magnétique extérieur, si bien que le dispositif de communication reste inactif, l'interrupteur de sécurité étant ouvert. De préférence l'interrupteur Reed 26 et l'interrupteur de sécurité 33 sont disposés aussi proches que possible en veillant à ce que le déplacement de l'aimant permanent 27, commandant l'interrupteur 26, soit sans effet sur l'interrupteur de sécurité 33.

Dans une deuxième configuration représentée à la figure 10, l'interrupteur de sécurité 33 est monté en parallèle de l'interrupteur Reed 26. Dans cette configuration les deux interrupteurs sont de même type. Dans l'exemple représenté à la figure 10 ils sont de type NO, l'interrupteur de sécurité étant monté sur une branche de dérivation. En cas d'attaque par un champ magnétique extérieur, l'interrupteur de sécurité se ferme simultanément avec l'interrupteur Reed si bien que l'antenne 11 est court-circuitée et que le dispositif reste inactif. On pourrait également utiliser deux interrupteurs de type NF, en intervertissant leur position, l'interrupteur Reed 26 piloté étant cette fois sur la branche de dérivation.

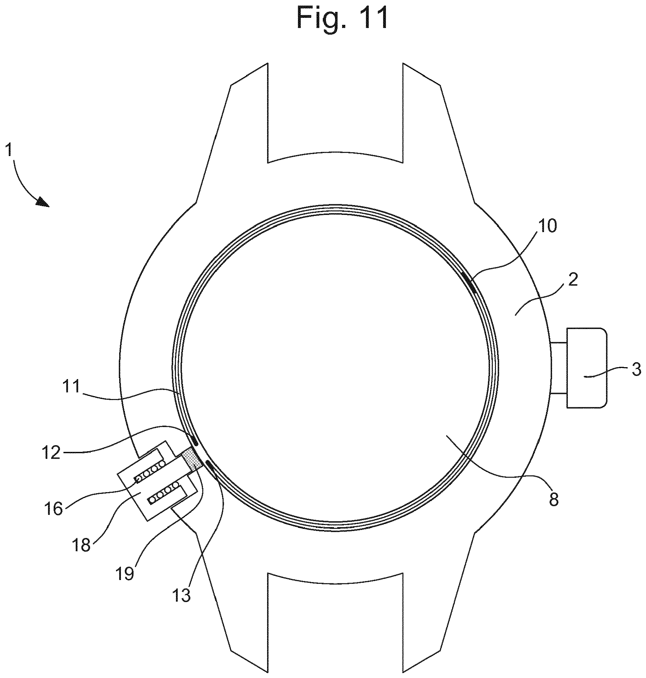

La figure 11 représente un deuxième mode de réalisation d'une montre 1 selon l'invention, dans le cas ou l'interrupteur mécanique est un interrupteur Reed, comportant une carrure 2 dans laquelle est logé un mouvement 8. Un dispositif de communication en champ proche est monté sur la périphérie du mouvement 8 et comporte une puce électronique 10 et une antenne 11. L'antenne 11 forme une boucle ouverte munie de deux portions terminales 12, 13 situées en vis-à-vis d'un bouton poussoir 18. L'extrémité 19 du bouton poussoir 18 est réalisée dans un matériau conducteur et est agencée pour venir conjointement en appui contre les deux portions terminales 12, 13. Pour se faire, au moins une des portions terminales peut être montée sur un support élastique ou bien l'extrémité 19 peut être montée légèrement pivotante en référence au bouton poussoir 18.

Le bouton poussoir 18 comporte en outre un ressort de rappel 16 qui maintient le bouton poussoir dans une position passive dans laquelle il n'y a pas de contact entre l'extrémité 19 et les portions terminales 12, 13. Dans cette position passive le circuit électrique formée par l'antenne 11 et la puce 10 est ouvert ce qui rend le dispositif de communication inactif. Lorsque le bouton poussoir 18 est pressé, son extrémité 19 se déplace et vient en appui contre les deux portions terminales 12, 13 ce qui a pour effet de fermer le circuit électrique formé par la puce 10 et l'antenne 11 et de rendre actif le dispositif de communication en champ proche. Dès que l'on relâche la pression sur le bouton poussoir 18, celui-ci revient automatiquement dans sa position passive et le dispositif de communication est désactivé. Il est bien sûr possible de réaliser les deux variantes expliquées précédemment via la couronne de commande que ce soit par rotation ou par pression. De même que précédemment, l'interrupteur galvanique peut être remplacé par un interrupteur magnétique. Dans ce cas un aimant permanent peut être cinématiquement lié au poussoir ou à la couronne de commande afin de piloter un interrupteur Reed remplaçant les portions terminales. De même que précédemment, il est possible de configurer le poussoir pour qu'il soit en parallèle au circuit électrique, et qu'au moment où l'utilisateur le presse, il ouvre le contact et rend le système actif.

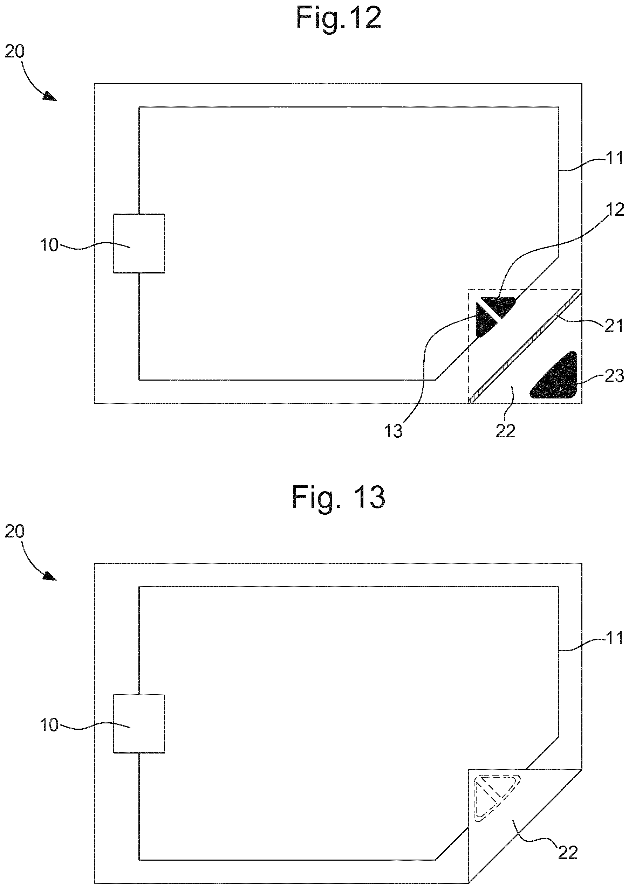

Les figures 12 et 13 représentent un autre type d'objet portable, à savoir une carte à puce 20. Celle-ci comporte un dispositif de communication en champ proche noyé dans la masse et formé d'une antenne 11 reliée à une puce électronique 10. L'antenne 10 forme une boucle ouverte se terminant par deux portions 12, 13 débouchant à la surface de la carte 20. Ces portions sont conductrices et robustes à l'environnement, comme le sont les contacts électriques d'une carte bancaire. Un segment souple 21 réalisé par exemple dans un matériau élastomère, délimite une partie 22 et forme une charnière permettant à la partie 22 de se replier. La partie 22 constitue un organe de commande apte à être déplacé autour de la charnière formée par le segment souple 21. En l'absence de contrainte, la partie 22 se trouve dans le plan de la carte à puce 20 c'est-à-dire dans la position passive représentée à la figure 5. La partie 22 comporte une pastille conductrice 23, légèrement proéminente et agencée pour venir en appui contre les portions terminales 12, 13 lorsque la partie 22 est repliée dans la position active représentée à la figure 13 de manière à fermer le circuit électrique formé par l'antenne 11 et la puce 10 et à activer le dispositif de communication en champ proche. L'élasticité du matériau composant le segment souple 21 permet le rappel élastique automatique de la partie 22 dans la position passive. Alternativement, la partie 22 pourrait comporter un aimant permanent 27 et commander un interrupteur Reed 26 monté en série sur la boucle de l'antenne 11.

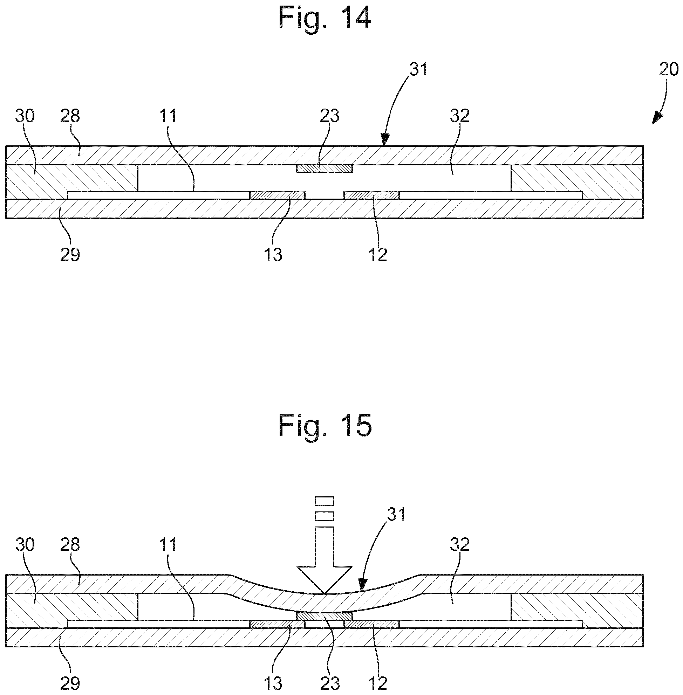

Les figures 14 et 15 représentent une variante de réalisation d'une carte à puce. La carte à puce 20 est ici vue en coupe, le dispositif de communication est à l'état passif sur la figure 14 et à l'état actif sur la figure 15. La carte à puce 20 présente une structure multicouche. Elle se compose d'une couche inférieure 29 destinée à venir en appui contre un lecteur, d'une couche supérieure 28 et entre les deux, d'une entretoise 30. L'entretoise 30 et les couches inférieure 29 et supérieure 31 délimitent un évidement 32 à l'intérieur de la carte à puce 20. On retrouve les portions terminales 12, 13 et la pastille conductrice 23, décrites dans le mode de réalisation précédent. Ces éléments sont placés dans la cavité 32 en vis-à-vis les uns des autres, sur les faces internes des couches inférieure et supérieure. La couche supérieure 28 comporte une paroi déformable 31 délimitant au moins partiellement l'évidement 32. En exerçant une pression sur la paroi déformable 31, celle-ci se déplace depuis une position passive jusqu'à une position active dans laquelle le contact électrique s'établit entre les portions terminales 12, 13 et la pastille conductrice 23. La paroi déformable 31 constitue ainsi l'organe de commande. L'élasticité de la paroi lui permet de retrouver sa position passive d'origine dès que la pression est relâchée.

Les objets portables selon l'invention, offrent une grande facilité d'usage et une meilleure sécurité que ceux pourvus des interrupteurs électroniques de l'art antérieur dont le changement d'état doit être commandé à l'avance depuis un appareil électronique extérieur, par exemple depuis un smartphone.

D'une façon avantageuse, le dispositif de sécurité proposé par l'invention permet d'éliminer tout risque de communication frauduleuse car le dispositif peut être activé alors que l'objet portable se trouve déjà à proximité et sous l'influence magnétique du lecteur avec lequel il est destiné à communiquer, si bien que la communication s'établit instantanément avec le lecteur cible dès que l'organe de commande est déplacé dans la position active. De plus, le retour automatique de l'organe de commande dans sa position passive sécurise immédiatement le dispositif dès que l'opération souhaitée a été effectuée et alors même que l'objet portable se trouve encore dans la portée du champ magnétique du lecteur cible.

Par ailleurs, le moyen de verrouillage mécanique proposé par l'invention donne à l'utilisateur la maîtrise de la sécurité du dispositif de communication en champ proche et lui apporte la confiance qui faisait jusqu'à présent défaut dans l'utilisation de cette technologie.

L'utilisaton du procédé Ceragold™ pour la réalisation d'une antenne offre plusieurs avantages. Il permet d'intégrer facilement l'antenne dans une pièce de montre, comme par exemple la lunette ou encore le cadran ou la boîte. Cette intégration peut être effectuée d'une façon visible et esthétique sur une face extérieure ou au contraire de façon discrète sur une face intérieure. Ce procédé de fabrication permet également de réaliser une antenne extrêmement durable et solide apte à résister au vieillissement dans les conditions d'utilisation les plus sévères et les environnements les plus hostiles. La réalisation de l'antenne peut de surcroit être facilement combinée à celle de repères destinés à faciliter la lecture d'informations horaires. De même, l'utilisation du métal amorphe comme élément conducteur peut aussi être envisagé.

L'homme du métier saura réaliser de multiples variations à partir des modes de réalisation présentés sans sortir du cadre des revendications.

## Revendications

1. Objet portable comportant un dispositif de communication en champ proche, le dispositif de communication comportant une antenne (11) dont les extrémités sont destinées à être reliées électriquement à une puce électronique (10) en formant avec la puce électronique (10) un circuit électrique, l'objet portable comportant un organe de commande (9, 18, 22, 31) apte à être déplacé entre deux positions prédéfinies, à savoir une position active dans laquelle le dispositif de communication est activé et une position passive dans laquelle le dispositif de communication est désactivé, l'objet portable comportant en outre un interrupteur mécanique (41) apte à permuter entre un état ouvert et un état fermé en réponse à un déplacement de l'organe de commande (9, 18, 22, 31) de l'une à l'autre de ses positions prédéfinies, **caractérisé en ce que** l'interrupteur mécanique (41) est un interrupteur Reed (26) et **en ce que** l'objet portable comporte un aimant permanent (27) mobile en référence à l'interrupteur Reed (26) et apte à modifier l'état de l'interrupteur Reed (26) en réponse à un déplacement de l'organe de commande.

2. Objet portable selon la revendication 1, **caractérisé en ce que** l'interrupteur mécanique (41) est monté en série sur le circuit électrique et **en ce que** l'interrupteur se trouve dans l'état ouvert quand l'organe de commande est en position passive.

3. Objet portable selon la revendication 1, **caractérisé en ce que** l'interrupteur mécanique (41) est monté en parallèle de l'antenne et **en ce que** l'interrupteur se trouve dans l'état fermé quand l'organe de commande est en position passive.

4. Objet portable selon la revendication 1, **caractérisé en ce que** l'aimant permanent (27) est lié cinématiquement à l'organe de commande.

5. Objet portable selon la revendication 1, **caractérisé en ce que** l'interrupteur Reed (26) est lié cinématiquement à l'organe de commande.

6. Objet portable selon l'une des revendications 1, 4 et 5, **caractérisé en ce qu'**il comporte au moins deux interrupteurs Reed disposés de façon sensiblement perpendiculaire.

7. Objet portable selon l'une des revendications 1, 4 à 6, **caractérisé en ce qu'**il comporte un interrupteur de sécurité (33) agencé pour changer d'état simultanément avec l'interrupteur Reed (26) en présence d'un champ magnétique extérieur.

8. Objet portable selon l'une des revendications précédentes, **caractérisé en ce qu'**il comporte un moyen de rappel (16) agencé pour ramener automatiquement l'organe de commande de la position active vers la position passive.

9. Objet portable selon la revendication précédente, **caractérisé en ce que** le moyen de rappel (16) comporte un élément élastique.

10. Objet portable selon l'une des revendications 8 ou 9, **caractérisé en ce qu'**il comporte un moyen de temporisation agencé pour retarder le retour de l'organe de commande de la position active vers la position passive.

11. Objet portable selon l'une des revendications précédentes, **caractérisé en ce que** l'objet portable est une montre (1).

12. Objet portable selon la revendication précédente, **caractérisé en ce qu'**il comporte une lunette pivotante (9) et **en ce que** l'organe de commande est la lunette (9).

13. Objet portable selon la revendication précédente, **caractérisé en ce que** l'antenne est formée par un procédé « Ceragold™ ».

14. Objet portable selon la revendication 12, **caractérisé en ce que** l'antenne est formée par un procédé « Métal Amorphe ».

15. Objet portable selon la revendication 11, **caractérisé en ce qu'**il comporte un poussoir (18) et que l'organe de commande est le poussoir (18).

16. Objet portable selon la revendication 11, **caractérisé en ce qu'**il comporte une couronne de commande et **en ce que** l'organe de commande est la couronne de commande.

17. Objet portable selon l'une des revendications 1 à 10, **caractérisé en ce que** l'objet portable est une carte à puce (20).

18. Objet portable selon la revendication précédente, **caractérisé en ce que** la carte à puce comporte un segment souple (21) délimitant une partie (22) et **en ce que** la partie (22) est l'organe de commande.

19. Objet portable selon la revendication 17, **caractérisé en ce que** la carte à puce comporte une paroi déformable (31) délimitant au moins partiellement un évidement (32) et **en ce que** la paroi déformable (31) est l'organe de commande.

## Patentansprüche

1. Tragbarer Gegenstand mit einer Nahfeld-Kommunikationsvorrichtung, wobei die Kommunikationsvorrichtung eine Antenne (11) umfasst, deren Enden dazu bestimmt sind, mit einem elektronischen Chip (10) elektrisch verbunden zu werden zum Bilden einer elektrischen Schaltung mit dem elektronischen Chip (10), wobei der tragbare Gegenstand ein Steuerelement (9, 18, 22, 31) umfasst, das zwischen zwei vordefinierten Positionen verstellbar ist, nämlich einer aktiven Position, in der die Kommunikationsvorrichtung aktiviert ist, und einer passiven Position, in der die Kommunikationsvorrichtung deaktiviert ist, wobei der tragbare Gegenstand ferner einen mechanischen Schalter (41) umfasst, der geeignet ist, als Reaktion auf eine Verstellung des Steuerelements (9, 18, 22, 31) aus der einen in die andere seiner vordefinierten Positionen zwischen einem offenen Zustand und einem geschlossenen Zustand zu wechseln, **dadurch gekennzeichnet, dass** der mechanische Schalter (41) ein Reed-Schalter (26) ist und dass der tragbare Gegenstand einen Permanentmagneten (27) umfasst, der in Bezug auf den Reed-Schalter (26) beweglich ist und geeignet ist, den Zustand des Reed-Schalters (26) als Reaktion auf eine Verstellung des Steuerelements zu ändern.

2. Tragbarer Gegenstand nach Anspruch 1, **dadurch gekennzeichnet, dass** der mechanische Schalter (41) mit der elektrischen Schaltung in Reihe geschaltet ist und dass sich der Schalter im geöffneten Zustand befindet, wenn das Steuerelement in der passiven Position ist.

3. Tragbarer Gegenstand nach Anspruch 1, **dadurch gekennzeichnet, dass** der mechanische Schalter (41) mit der Antenne parallelgeschaltet ist und dass sich der Schalter im geschlossenen Zustand befindet, wenn das Steuerelement in der passiven Position ist.

4. Tragbarer Gegenstand nach Anspruch 1, **dadurch gekennzeichnet, dass** der Permanentmagnet (27) mit dem Steuerelement kinematisch verbunden ist.

5. Tragbarer Gegenstand nach Anspruch 1, **dadurch gekennzeichnet**, das der Reed-Schalter (26) mit dem Steuerelement kinematisch verbunden ist.

6. Tragbarer Gegenstand nach einem der Ansprüche 1, 4 und 5, **dadurch gekennzeichnet, dass** er mindestens zwei im Wesentlichen senkrecht angeordnete Reed-Schalter umfasst.

7. Tragbarer Gegenstand nach einem der Ansprüche 1, 4 bis 6, **dadurch gekennzeichnet, dass** er einen Sicherheitsschalter (33) umfasst, der dafür ausgelegt ist, in Anwesenheit eines äußeren Magnetfeldes seinen Zustand gleichzeitig mit dem Reed-Schalter (26) zu ändern.

8. Tragbarer Gegenstand nach einem der vorhergehenden Ansprüche, **dadurch gekennzeichnet, dass** er ein Rückstellmittel (16) umfasst, das so angeordnet ist, dass das Steuerelement automatisch aus der aktiven Position in die passive Position zurückgestellt wird.

9. Tragbarer Gegenstand nach dem vorhergehenden Anspruch, **dadurch gekennzeichnet, dass** das Rückstellmittel (16) ein elastisches Element umfasst.

10. Tragbarer Gegenstand nach einem der Ansprüche 8 oder 9, **dadurch gekennzeichnet, dass** er ein Verzögerungsmittel umfasst, das dazu vorgesehen ist, die Rückkehr des Steuerelements aus der aktiven Position in die passive Position zu verzögern.

11. Tragbarer Gegenstand nach einem der vorhergehenden Ansprüche, **dadurch gekennzeichnet, dass** der tragbare Gegenstand eine tragbare Uhr (1) ist.

12. Tragbarer Gegenstand nach dem vorhergehenden Anspruch, **dadurch gekennzeichnet, dass** er eine schwenkbare Lünette (9) umfasst und dass das Steuerelement die Lünette (9) ist.

13. Tragbarer Gegenstand nach dem vorhergehenden Anspruch, **dadurch gekennzeichnet, dass** die Antenne durch ein "Ceragold™"-Verfahren gebildet ist.

14. Tragbarer Gegenstand nach Anspruch 12, **dadurch gekennzeichnet, dass** die Antenne durch ein "Amorphmetall"-Verfahren gebildet ist.

15. Tragbarer Gegenstand nach Anspruch 11, **dadurch gekennzeichnet, dass** er einen Taster (18) umfasst und dass das Steuerelement der Taster (18) ist.

16. Tragbarer Gegenstand nach Anspruch 11, **dadurch gekennzeichnet, dass** er eine Steuerkrone umfasst und dass das Steuerelement die Steuerkrone ist.

17. Tragbarer Gegenstand nach einem der Ansprüche 1 bis 10, **dadurch gekennzeichnet, dass** der tragbare Gegenstand eine Chipkarte (20) ist.

18. Tragbarer Gegenstand nach dem vorhergehenden Anspruch, **dadurch gekennzeichnet, dass** die Chipkarte ein flexibles Segment (21) aufweist, das einen Teil (22) begrenzt, und dass der Teil (22) das Steuerelement ist.

19. Tragbarer Gegenstand nach Anspruch 17, **dadurch gekennzeichnet, dass** die Chipkarte eine verformbare Wand (31) aufweist, die eine Aussparung (32) mindestens teilweise begrenzt, und dass die verformbare Wand (31) das Steuerelement ist.

## Claims

1. Portable object comprising a near-field communication device, the communication device comprising an antenna (11), the ends of which are intended to be connected electrically to an electronic chip (10), forming, together with the electronic chip (10), an electrical circuit, the portable object comprising a control element (9, 18, 22, 31) which is able to be displaced between two predefined positions, i.e. an active position in which the communication device is activated and a passive position in which the communication device is deactivated, the portable object comprising, furthermore, a mechanical switch (41), which is able to switch between an open state and a closed state in response to a displacement of the control element (9, 18, 22, 31) from one to the other of its predefined positions, **characterized in that** the mechanical switch (41) is a Reed switch (26) and **in that** the portable object comprises a permanent magnet (27) which is mobile relative to the Reed switch (26) and able to modify the state of the Reed switch (26) in response to a displacement of the control element.

2. Portable object according to claim 1, **characterised in that** the mechanical switch (41) is mounted in series on the electrical circuit and **in that** the switch is situated in the open state when the control element is in passive position.

3. Portable object according to claim 1, **characterised in that** the mechanical switch (41) is mounted in parallel with the antenna and **in that** the switch is situated in the closed state when the control element is in passive position.

4. Portable object according to claim 1, **characterised in that** the permanent magnet (27) is connected kinematically to the control element.

5. Portable object according to claim 1, **characterised in that** the Reed switch (26) is connected kinematically to the control element.

6. Portable object according to one of the claims 1, 4 and 5, **characterised in that** it comprises at least two Reed switches disposed in an essentially perpendicular manner.

7. Portable object according to one of the claims 1, 4 to 6, **characterised in that** it comprises a security switch (33) which is provided to change state simultaneously with the Reed switch (26) in the presence of an external magnetic field.

8. Portable object according to one of the preceding claims, **characterised in that** it comprises a restoring means (16) provided to return the control element automatically from the active position to the passive position.

9. Portable object according to the preceding claim, **characterised in that** the restoring means (16) comprises an elastic element.

10. Portable object according to one of the claims 8 or 9, **characterised in that** it comprises a time delay means provided to delay return of the control element from the active position to the passive position.

11. Portable object according to one of the preceding claims, **characterised in that** the portable object is a watch (1).

12. Portable object according to claim 11, **characterised in that** it comprises a pivoting bezel (9), and **in that** the control element is the bezel (9).

13. Portable object according to the preceding claim, **characterised in that** the antenna is formed by a "Ceragold™" process.

14. Portable object according to claim 12, **characterised in that** the antenna is formed by an "Amorphous Metal" process.

15. Portable object according to claim 11, **characterised in that** it comprises a push button (18), and **in that** the control element is the push button (18).

16. Portable object according to claim 11, **characterised in that** it comprises a control crown, and **in that** the control element is the control crown.

17. Portable object according to one of the claims 1 to 10, **characterised in that** the portable object is a chip card (20).

18. Portable object according to preceding claim, **characterised in that** the chip card comprises a flexible segment (21) delimiting a part (22), and **in that** the part (22) is the control element.

19. Portable object according to claim 17, **characterised in that** the chip card comprises a deformable wall (31) delimiting at least partially a recess (32), and **in that** the deformable wall (31) is the control element.
